# EUROPÄISCHE PATENTANMELDUNG

(11) **EP 1 517 421 A1**
(43) Veröffentlichungstag der Anmeldung: **23.03.2005**
(21) Anmeldenummer: 04019672.7
(22) Anmeldetag: 19.08.2004
(51) Int. Cl.: H02B 1/30

(54) **Elektroschrank**

(30) Priorität: 02.09.2003 CH 14992003
(71) Anmelder: Almatec AG, 6170 Schüpfheim (CH)
(72) Erfinder: Süess, Josef, 6103 Schwarzenberg (CH); Limacher, Tony, 6182 Escholzmatt (CH)
(74) Vertreter: Lauer, Joachim, Dr.

(57) **Zusammenfassung**

Bei einem Elektroschrank (1) insbesondere für Telekommunikations- und/oder Netzwerkanwendungen und/oder Steuerungsbauten mit zumindest teilweise abnehmbaren Seitenwandelementen (5, 6) und einer abschliessbaren Tür (4), wobei ein hinterer Bereich mit Elektronikkomponenten bestückbar ist und wobei ein vorderer Bereich sowie ein an diesen angrenzender Teil eines abnehmbaren Seitenwandelements (5, 6) durch die Tür (4) hindurch auch dann noch zugänglich sind, wenn der hintere Bereich komplett mit Elektronikkomponenten bestückt ist wird erfindungsgemäss vorgeschlagen, dass das abnehmbare Seitenwandelement (5, 6) nur nach einem Lösen vom Schrankinneren her abnehmbar ist, wobei zum Lösen eine Manipulation an seinem zugänglichen Teil im vorderen Schrankbereich genügt.

## Beschreibung

### TECHNISCHES GEBIET

Die vorliegende Erfindung betrifft einen Elektroschrank insbesondere für Telekommunikations- und/oder Netzwerkanwendungen und/oder Steuerungsbauten mit zumindest teilweise abnehmbaren Seitenwandelementen und einer abschliessbaren Tür, wobei ein hinterer Bereich mit Elektronikkomponenten bestückbar ist und wobei ein vorderer Bereich sowie ein an diesen angrenzender Teil eines abnehmbaren Seitenwandelements durch die Tür hindurch auch dann noch zugänglich sind, wenn der hintere Bereich komplett mit Elektronikkomponenten bestückt ist.

Unter den Elektronikkomponenten sollen hier generell alle für die Anwendung in Frage kommenden Arten von elektrischen und/oder elektronischen Geräten verstanden werden, einschliesslich Computerkomponenten, Stromversorgungen, Klimageräten oder sonstigen Hilfsaggregaten.

### STAND DER TECHNIK

Elektroschränke der genannten Art sind bekannt und verbreitet im Einsatz, wobei häufig mehrere solcher Schränke nebeneinander und/oder paarweise rückseitig aneinander in Reihen aufgestellt sind.

Zum Einbau und zur Verkabelung der Elektronikkomponenten, insbesondere wenn diese dicht gepackt angeordnet sind und dadurch der hintere Innenraumbereich von vorne durch die Tür hindurch nicht mehr erreichbar ist, ist es häufig erforderlich, zumindest eines der beiden Seitenwandelemente zu entfernen. Bei den bekannten Schränken ist dies problemlos möglich, weil die Wände von aussen aufgeschraubt sind.

Inbesondere bei Anwendungen im Bereich der Telekommunikation oder in Rechenzentren, bei denen mit den eingebauten Elektronikkompomenten vertrauliche Daten verarbeitet werden, erweist sich die einfache Abnehmbarkeit der Schrankwände jedoch als Nachteil. Hier will man nach Möglichkeit eine Zugänglichkeit für unbefugte Dritte zum Innern der Schränke vermeiden. Die regelmässig vorhandene Abschliessbarkeit der Tür bringt nichts, solange die Wände einfach abnehmbar sind. Man hat in Telekommunikationsanlagen und Rechenzentren denn auch schon ganze Schrankgruppen in abschliessbare Drahtkäfige gepackt, um die unkontrollierte Zugänglichkeit der in den Schänken enthaltenen Elektronikkompontenen zu unterbinden.

### DARSTELLUNG DER ERFINDUNG

Hier will die Erfindung Abhilfe schaffen und schlägt gemäss Patentanspruch 1 bei einem Elektroschrank der eingangs genannten Art vor, diesen so auszubilden, dass das abnehmbare Seitenwandelement nur nach einem Lösen vom Schrankinneren her abnehmbar ist, wobei zum Lösen jedoch eine Manipulation an seinem zugänglichen Teil im vorderen Schrankbereich genügt.

Gemäss einer ersten bevorzugten Ausführungsform der Erfindung ist das abnehmbare Seitenwandelement durch Einhängen unter Ausbildung mindestens einer formschlüssigen Verbindung befestigt ist und umfasst die Manipulation zum Lösen des Seitenwandelements das Lösen einer Sicherung gegen ein Aushängen unter Aufheben der formschlüssigen Verbindung.

Sehr einfach kann die mindestens eine formschlüssige Verbindung als Haken- und Ösenverbindung ausgebildet sein, wobei die Haken z.B. von einem Rahmen nach aussen vorstehende Halteköpfe und die Ösen z.B. korrespondierende, sich nach einer Seite hin verjüngende Öffnungen an dem abnehmbaren Seitenwandelement sind.

Damit die Halteköpfe und die mit ihnen korrespondierenden Öffnungen an dem Seitenwandelement von aussen nicht zugänglich sind, können das abnehmbare Seitenwandelement im Bereich der Öffnungen doppelwandig ausgebildet und die Öffnungen jeweils in der Innenwandung ausgebildet sein.

Weiter bevorzugt sind die genannten Halteköpfe mit einer sich verjüngenden Halspartie versehen, so dass sich, bei geeigneter Bemessung und Formgebung der mit ihnen korrespondierenden Öffnungen, eine spielfreie Befestigung des Seitenwandelements z.B. in Anlage an dem erwähnten Rahmen ergibt.

Gemäss einer weiteren bevorzugten Ausführungsform der Erfindung umfasst die Manipulation zum Lösen des Seitenwandelements das Lösen einer Verschraubung. Sofern das abnehmbare Seitenwandelement im übrigen durch Einhängen unter Ausbildung mindestens einer formschlüssigen Verbindung befestigt ist, genügt hierbei grundsätzlich eine einzige Verschraubung.

Zur Vermeidung einer Zugänglichkeit von aussen kann das Seitenwandelement auch im Bereich der Verschraubung doppelwandig ausgebildet sein, wobei dann z.B. in einer Öffnung der Innenwandung eine Käfigmutter gehalten ist.

### KURZE ERLÄUTERUNG DER FIGUREN

Die Erfindung soll nachfolgend anhand eines Ausführungsbeispiels im Zusammenhang mit der Zeichnung näher erläutert werden. Es zeigen jeweils in perspektivischer Ansicht:
- Fig. 1: einen Elektroschrank nach der Erfindung;
- Fig. 2: den oberen Teil des Elektroschranks mit abgenommenem Seitenwandelement und mit einer Ausschnittsvergrösserung eines Haltekopfes;
- Fig. 3: den unteren Teil des Elektroschranks mit abgenommenem Seitenwandelement; und
- Fig. 4: das Seitenwandelement in Ansicht auf seine Innenseite.

### WEGE ZUR AUSFÜHRUNG DER ERFINDUNG

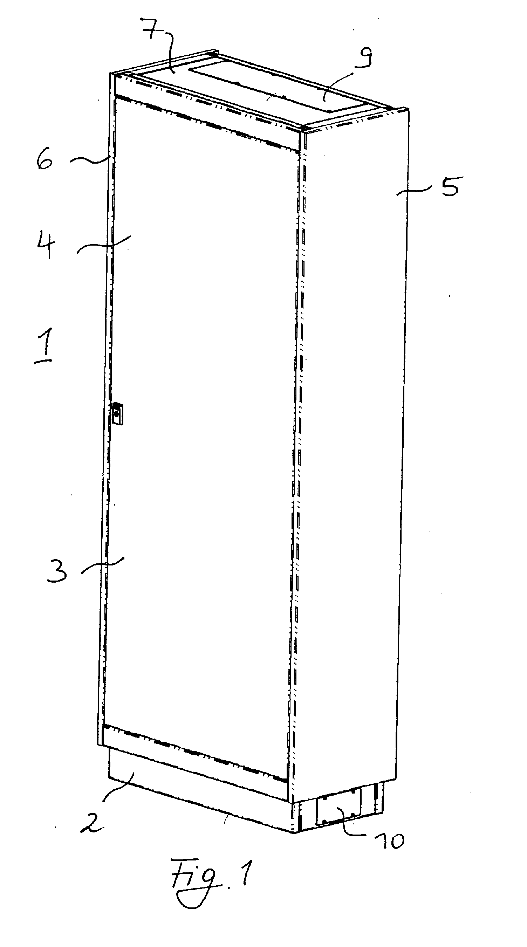

Der Elektroschrank 1 von Fig. 1 weist auf einem Sockel 2 den eigentlichen Schrankkörper 3 mit einer frontseitigen, abschliessbaren Tür 4, zwei abnehmbaren Seitenwandelementen 5 und 6 sowie einer Deckelplatte 7 auf. Rückseitig wird der Schrankkörper 3 durch ein in Fig. 1 nicht erkennbares, ggf. ebenfalls abnehmbares Rückwandelement 8 abgeschlossen. In der Deckelplatte 7 sowie im Sockel 2 sind jeweils mit Abdeckplatten noch verschlossene Öffnungen 9 und 10 für die Durchführung von Kabeln oder dergleichen vorgesehen.

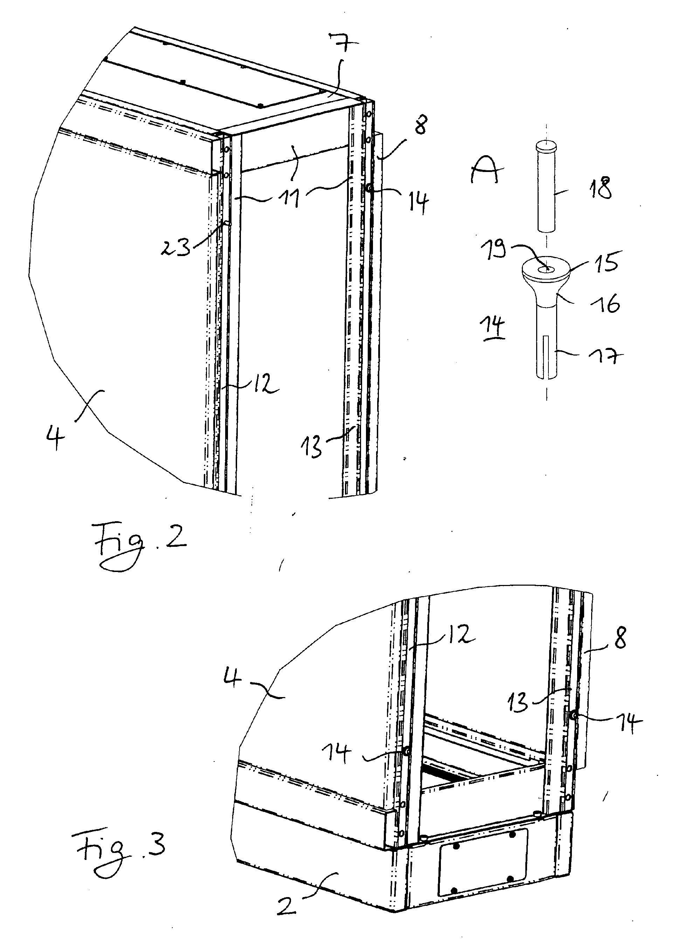

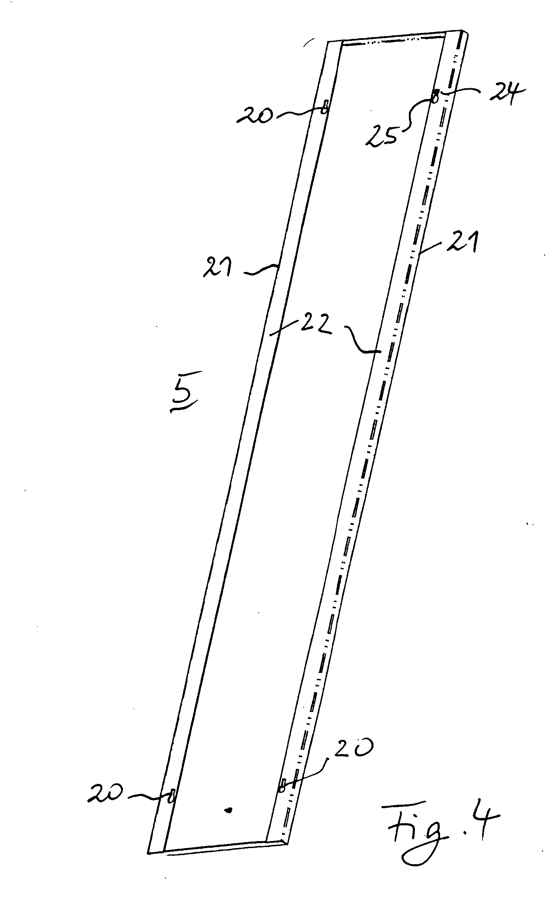

Die Figuren 2 und 3 zeigen den Elektroschrank 1 mit abgenommenem Seitenwandelement 5, wodurch sein Innenaufbau mit einem tragenden Rahmen 11 sowie auch das Rückwandelement 8 teilweise erkennbar sind. An dem Rahmen 11 sind die erwähnten sogenannten Beplankungen 4 - 8 einschliesslich des Seitenwandelements 5 befestigt. Der Rahmen 11 dient auch zum Einbau und als Träger von Elektronikkomponenten, welche in den Figuren 3 und 4 jedoch nicht dargestellt sind. Insoweit entspricht der Elektroschrank 1 dem an sich üblichen Standard.

Gemäss der vorliegenden Erfindung ist jedoch zumindest die Befestigung des Seitenwandelements 5 in besonderer Seite ausgebildet. Hierzu sind, wie in Fig. 2 und 3 dargestellt, an den Eckpfosten 12 und 13 des Rahmens 11 insgesamt drei nach aussen vorstehende Halteköpfe 14 vorgesehehen, von denen einer in Fig. 2 im Ausschnitt A vergrössert dargestellt ist. Danach weisen die Halteköpfe 14 einen verbreiterten Kopf 15 und eine demgegenüber verjüngte, sich zu dem Rahmenteilen 12 bzw. 13 hin zusätzlich noch etwa konisch verjüngende Halspartie 16 auf. Wie die Halteköpfe 14 an den Rahmenteilen befestigt sind ist an sich gleichgültig. Bei dem im Ausschnitt A dargestellten Haltekopf 14 ist dazu ein dübelartiger Fuss 17 vorgesehen, mit dem er in ein Rahmenloch eingesteckt und darin durch Einschlagen eines Spreizdornes 18 durch ein zentrales Durchgangsloch 19 festgelegt werden kann.

Mit den Halteköpfen 14 wirken an dem Seitenwandelement 5 schlüssellochförmige Öffnungen 20 komplementär zusammen, wobei die weiteren unteren Bereiche der Öffnungen 20 an den verbreiterten Kopf 15 und die engeren oberen Bereiche an die verjüngte Halspartie 16 der Halteköpfe 14 angepasst ist. Das Seitenwandelement 5 selbst besteht, wie vorzugsweise auch die anderen Beplankungen, aus einem Blechmaterial und weist im Bereich seiner beiden Längskanten 21 Abkantungen auf, wodurch sich eine Art Doppelwandung mit schmalen Innenwandungen 22 ergibt, aus welchen die Öffnungen 20 ausgestanzt sind.

Bei der so beschriebenen Ausbildung kann das Seitenwandelement 5 einfach von aussen an dem Rahmen 11 eingehängt werden, wobei die Halteköpfe 14 nach Art von formschlüssigen Haken- und Ösenverbindungen mit den schlüssellochförmigen Öffnungen 20 in Eingriff kommen. Durch die etwa konische Ausbildung der Halspartie 16 der Halteköpfe 14 wird das Seitenwandelement 5 hierbei unter seinem Eigengewicht zusätzlich gegen den Rahmen 11 bzw. die Rahmenteile 12, 13 gepresst und liegt insofern spiefrei an diesem an. Umgekehrt ist das Seitenwandwandelement 5 durch Aushängen auch wieder abnehmbar.

Zur Sicherung des Seitenwandelements 5 in der eingehängten Position sowie als weiteres Befestigungsmittel ist, wie in Fig. 2 erkennbar, an dem an die Tür 4 angrenzenden vorderen Eckpfosten 12 etwa auf gleicher Höhe fluchtend mit dem oberen Haltekopf 14 am hinteren Eckpfosten 13, eine Schraube 23 von innen durch den Eckpfosten 12 gesteckt und darin mit ihrem nicht sichtbaren Schraubenkopf verankert. Die Schraube 23 wirkt zusammen mit einer Käfigmutter 24, welche in die korresponierende schlüssellochförmige Öffnung 25 des Seitenwandelements 5 eingesetzt ist. Durch eine geeignete Formgebung der Öffnung 25 mit kleinen Rastnasen kann erreicht werden, dass die Käfigmutter 24 in der Öffnung einrastet und nicht herausfallen kann. Mit in die Käfigmutter 24 eingedrehter Schraube 23 ist das Seitenwandelement am Rahmen 11 auch im Bereich seiner vorderen oberen Ecke formschlüssig gehalten und insgesamt auch nicht länger verschiebbar, so dass es nicht mehr ausgehängt werden kann. Bei abgeschlossener Tür 4 ist der Innenraum des Elektroschranks 1 dann zumindest von der Seite des Seitenwandelements 5 her für Unbefugte Dritte nicht mehr zugänglich.

Zum Sichern und Lösen des Seitenwandelements 5 im eingehängten Zustand ist demnach lediglich eine einzige Manipulation, nämlich das Betätigen der Schraube 23, erforderlich. Wesentlich hierbei ist, dass die Schraube 23 durch die Tür 4 im Schrankinnenraum auch dann noch erreichbar ist, wenn dieser mit Elektronikkomponenten komplett bestückt ist. Indem jedoch stets wenige Zentimeter Platz zwischen den Elektronikkomponenten und der Tür vorhanden ist und andererseits die Schraube 23 im vorderen Eckpfosten 12 und die Käfigmutter 24 im Bereich der vorderen Längskante des Seitenwandelements 5 angeordnet sind, ist dies sichergestellt. Ein Manipulation im hinteren Schrankbereich kann bei voller Bestückung dagegen unmöglich sein.

Selbstverständlich könnte die Verschraubung statt vorne oben auch vorne unten an dem Seitenwandelement 5 angeordnet sein, oder es könnten unten und oben solche Verschraubungen vorgesehen sein, wobei letzeres jedoch eher umständlicher bezüglich der Handhabung wäre. Anstelle einer Verschraubung käme grundsätzlich auch eine nur vom Schrankinnern her lösbare Rast- oder Riegelverbindung oder dergleichen in Frage.

Durch die bereichsweise doppelwandige Ausbildung des Seitenwandelements 5 und die Anordnung der Öffnungen 20 jeweils in den Innenwandungen 22 sind die erfindungsgemäss eingesetzten Befestigungsmittel 14 bzw. 23 und 24 von aussen weder sichtbar noch für irgendwelche Manipulationen zugänglich. Die Befestigungsmittel tragen dadurch im Unterschied zu den üblicherweise verwendeten Schrauben mit aussenliegenden Schraubenköpfen auch nicht auf, so dass mehrere erfindungsgemäss ausgebildete Elektroschränke mit montierten Seitenwandelementen 5 bzw. 6 ohne Zwischenräume unmittelbar aneinandergereit werden können. Der erfindungsgemässe Elektroschrank erhält dadurch auch ein ästhetisches Aussehen.

Indem das Seitenwandelement 5 (mindestens) in allen seinen vier Eckbereichen gehalten ist, ist es auch unter Anwendung von Gewalt nicht ohne weiteres entfernbar. Jedenfalls wäre der Versuch einer gewaltsamenen Öffnung des erfindungsgemässen Elektroschranks im Nachhinein erkennbar.

Es versteht sich, dass bevorzugt auch das Seitenwandelement 6 in der vorbeschriebenen Weise befestigt ist, so dass der Elektroschrank von beiden Seiten aus zugänglich ist und beiseitig sicher auch wieder verschlossen werden kann. Bezüglich des Rückwandelements 8 kann vorgesehen sein, dass auch dieses nur vom Innenraum aus entfernbar ist.

### BEZEICHNUNGSLISTE

- 1: Elektroschrank
- 2: Sockel
- 3: Schrankkörper
- 4: Tür
- 5, 6: Seitenwandelement3
- 7: Deckelplatte
- 8: Rückwandelement
- 9, 10: Kabeldurchführungtsöffnung
- 11: Rahmen
- 12, 13: Rahmen-Eckpfosten
- 14: Halteköpfe
- 15: Kopf der Halteköpfe
- 16: Halspartie der Halteköpfe
- 17: Fuss der Halteköpfe
- 18: Spreizdorn
- 19: Durchgangsloch der Halteköpfe
- 20: Öffnungen
- 21: Längskanten
- 22: Innenwandungen
- 23: Schraube
- 24: Käfigmutter
- 25: Öffnung

## Patentansprüche

1. Elektroschrank (1) insbesondere für Telekommunikations- und/oder Netzwerkanwendungen und/oder Steuerungsbauten mit zumindest teilweise abnehmbaren Seitenwandelementen (5, 6) und einer abschliessbaren Tür (4), wobei ein hinterer Bereich mit Elektronikkomponenten bestückbar ist und wobei ein vorderer Bereich sowie ein an diesen angrenzender Teil eines abnehmbaren Seitenwandelements (5) durch die Tür (4) hindurch auch dann noch zugänglich sind, wenn der hintere Bereich komplett mit Elektronikkomponenten bestückt ist, **dadurch gekennzeichnet, dass** das abnehmbare Seitenwandelement (5) nur nach einem Lösen vom Schrankinneren her abnehmbar ist, wobei zum Lösen eine Manipulation an seinem zugänglichen Teil im vorderen Schrankbereich genügt.

2. Elektroschrank nach Anspruch 1, **dadurch gekennzeichnet, dass** das abnehmbare Seitenwandelement (5) durch Einhängen unter Ausbildung mindestens einer formschlüssigen Verbindung (14, 20) befestigt ist und dass die Manipulation das Lösen einer Sicherung (23, 24) gegen ein Aushängen unter Aufheben der formschlüssigen Verbindung umfasst.

3. Elektroschrank nach Anspruch 1 oder 2, **dadurch gekennzeichnet, dass** die mindestens eine formschlüssige Verbindung (19, 20) als Haken- und Ösenverbindung ausgebildet ist.

4. Elektroschrank nach Anspruch 3, **dadurch gekennzeichnet, dass** die Haken durch nach aussen vorstehende Halteköpfe (14) sowie durch korrespondierende, sich nach nach einer Seite hin verjüngende Öffnungen (20) an dem abnehmbaren Seitenwandelement (5) ausgebildet sind.

5. Elektroschrank nach Anspruch 4, **dadurch gekennzeichnet, dass** das abnehmbare Seitenwandelement (5) im Bereich der Öffnungen (20) doppelwandig ausgebildet ist und dass die Öffnungen (20) jeweils in der Innenwandung (22) ausgebildet sind.

6. Elektroschrank nach einem der Ansprüche 4 oder 5, **dadurch gekennzeichnet, dass** die Halteköpfe (14) mit einer sich verjüngenden Halspartie (16) versehen sind.

7. Elektroschrank nach einem der Ansprüche 1 - 6, **dadurch gekennzeichnet, dass** die Manipulation das Lösen einer Verschraubung (23, 24) umfasst.

8. Elektroschrank nach Anspruch 7, **dadurch gekennzeichnet, dass** das Seitenwandelement (5) im Bereich der Verschraubung (23, 24) doppelwandig ausgebildet ist und dass in einer Öffnung der Innenwandung (22) eine Käfigmutter (24) gehalten ist.

9. Elektroschrank nach einem der Ansprüche 1 - 8, **dadurch gekennzeichnet, dass** das Seitenwandelement (5) rechteckig ist und mindestens jeweils nahe seinen vier Ecken befestigt ist.
